# EUROPEAN PATENT APPLICATION

(11) **EP 2 605 586 A1**
(43) Date of publication of application: **19.06.2013**
(21) Application number: 11752811.7
(22) Date of filing: 24.02.2011
(51) Int. Cl.: H04W 36/00

(54) **STREAM MEDIA CHANNEL SWITCH METHOD, SWITCH AGENT, CLIENT AND TERMINAL**

(30) Priority: 10.08.2010 CN 201010249990
(71) Applicant: Huawei Technologies Co., Ltd., Shenzhen, Guangdong 518129 (CN)
(72) Inventor: XIA, Bin, Shenzhen Guangdong 518129 (CN)
(74) Representative: Isarpatent
(86) International application number: PCT/CN2011/071236
(87) International publication number: WO 2011/110068

(57) **Abstract**

Embodiments of this invention relate to a stream media channel switch method, a switch agent, a client and a terminal. The channel switch method includes: playing stream media data of a current channel by a playing module of a stream media client; after a channel switch agent receives a channel switch request message sent from a service module of the stream media client, sending the channel switch request message to a stream media server by the channel switch agent, wherein the channel switch request message carries with switched channel ID information and client ID information of the stream media client; sending stream media data corresponding to the switched channel ID to the playing module of the stream media client by the stream media server through a stream playing session corresponding to the client ID, and playing the stream media data corresponding to the switched channel ID by the playing module. The channel switch can be realized through cooperation between the service module and the stream media server, so that the playing capability of the playing module is not limited, the channel switch is not dependent on the real time stream media consultation between the terminal and the stream media server, and the current stream media playing is not influenced.

## Description

This application claims priority to Chinese Patent Application No. 201010249990.4, filed with the Chinese Patent Office on Aug. 10, 2010 and entitled "STREAM MEDIA CHANNEL SWITCH METHOD, SWITCH AGENT, CLIENT AND TERMINAL", which is incorporated herein by reference in its entirety.

### FIELD OF THE INVENTION

The present invention relates to the field of communication techniques, and more specifically, to a stream media channel switch method, a channel switch agent, a stream media client and a terminal.

### BACKGROUND OF THE INVENTION

Stream media refers to a medium format employing streaming transmission. Particularly, a FCS (Fast Channel Switching) scheme for stream media is defined in the 3GPP R7 specification: in stream media living broadcasting service, a terminal and a stream media server complete channel switching process on the premise of without deconstructing and reconstructing a media playing session, so that user operations in channel switching process can be reduced, and user experience can be improved.

Since the FCS scheme in the 3GPP R7 specification requires that playing module of a client supports FCS capability, herein, client refers to software or module executable on a terminal. However, many current playing modules have no interface for FCS provided thereon, which causes that the FCS scheme is limited to the capability of the playing module, and applicable terminals are not widely used. Furthermore, the FCS scheme is based on RTSP (Real Time Streaming Protocol) consultation interaction between playing module of client and stream media server, resulting in impacts on the playing of current stream media.

### SUMMARY OF THE INVENTION

A stream media channel switch method, a channel switch agent, a stream media client and terminal are provided in embodiments of this invention, for realizing channel switch through a service module of the stream media client.

A stream media channel switch method is provided in an embodiment of this invention, comprising:
playing stream media data of a current channel by a playing module of a stream media client;
when a channel switch agent receives a channel switch request message sent from a service module of the stream media client, sending the channel switch request message to a stream media server by the channel switch agent, the channel switch request message carrying with switched channel ID information and client ID information of the stream media client;
through a stream playing session corresponding to the client ID, sending stream media data corresponding to the switched channel ID to the playing module of the stream media client by the stream media server, to play the stream media data corresponding to the switched channel ID by the playing module.

A stream media channel switch method is further provided in an embodiment of this invention, comprising:
playing stream media data of a current channel by a playing module of a stream media client;
sending a channel switch request message to a channel switch agent by a service module of the stream media client, the channel switch request message carrying with switched channel ID information and client ID information of the stream media client;
receiving, by the playing module of the stream media client, stream media data corresponding to the switched channel ID sent from a stream media server through a stream playing session corresponding to the client ID, and playing the stream media data corresponding to the switched channel ID by the playing module.

Correspondingly, a stream media client is provided in an embodiment of this invention, comprising:
a service module, for when a playing module is playing stream media data of a current channel, sending a channel switch request message to a channel switch agent, the channel switch request message carrying with switched channel ID information and client ID information of the stream media client;
a playing module, for playing stream media data of a current channel, and after channel switch, receiving stream media data corresponding to the switched channel ID sent from a stream media server through a stream playing session corresponding to the client ID, and playing the stream media data corresponding to the switched channel ID sent from the stream media server.

A terminal is further provided in an embodiment of this invention, comprising the above described stream media client.

Correspondingly, a channel switch agent is provided in an embodiment of this invention, comprising:
a receiving unit for receiving a channel switch request message sent from a service module of a stream media client, the channel switch request message carrying with switched channel ID information and client ID information of the stream media client;
a sending unit for sending the channel switch request message carrying with switched channel ID information and the client ID information to a stream media server.

It can be seen from technical solutions provided in embodiments of this invention, the service module of the stream media client and the stream media server cooperate to realize channel switch, causing no restrictions on play capability of the playing module of the stream media client, and thus adaptable to a wide range of terminals; in addition, channel switch does not depend on real time stream media consultation between the terminal and the stream media server, having no impacts on the play of a current stream.

### BRIEF DESCRIPTION OF THE DRAWINGS

For a more explicit description of the technical solutions of embodiments of this invention, a brief introduction of accompanying drawings to be used in the description of these embodiments will be given below. Obviously, accompanying drawings described below are merely some embodiments of this invention, for those skilled in the art, other accompanying drawings can be derived from these ones without any creative efforts.
Fig.1 is a schematic flowchart of a stream media channel switch method according to an embodiment of this invention;
Fig.2 is a schematic flowchart of a stream media channel switch method according to another embodiment of this invention;
Fig.3 is a schematic structure diagram of a stream media client according to an embodiment of this invention;
Fig.4 is a schematic structure diagram of a terminal according to an embodiment of this invention;
Fig.5 is a schematic structure diagram of a channel switch agent according to an embodiment of this invention;
Fig.6 is a schematic structure diagram of a channel switch system for stream media according to another embodiment of this invention;
Fig.7 is a schematic structure diagram of a channel switch system for stream media according to another embodiment of this invention;

### DETAILED DESCRIPTION OF THE EMBODIMENTS

A clear, complete description will be given to technical solutions of embodiments of this invention in connection with accompanying drawings of embodiments of this invention. Obviously, embodiments described herein are merely some embodiments of this invention, but not all of them. Based on those embodiments of this invention, other embodiments can occur to those skilled in the art without any creative efforts, all of which fall within the scope of this invention.

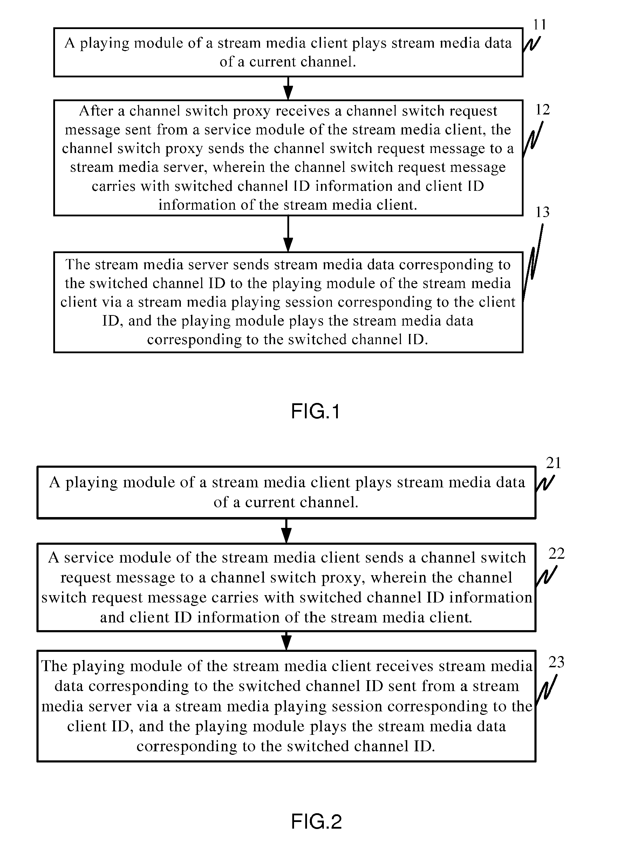

As shown in Fig.1, a stream media channel switch method is provided in an embodiment of this invention, comprising the following steps.

11. A playing module of a stream media client plays stream media data of a current channel.

12. when a channel switch agent receives a channel switch request message sent from a service module of the stream media client, the channel switch agent sends the channel switch request message to a stream media server, the channel switch request message carrying with switched channel ID information and client ID information of the stream media client.

13. Through a stream playing session corresponding to the client ID, the stream media server sends stream media data corresponding to the switched channel ID to the playing module of the stream media client to play the stream media data corresponding to the switched channel ID by the playing module.

It can be seen from technical solutions provided in embodiments of this invention, the service module of the stream media client and the stream media server cooperate to realize channel switch, causing no restrictions on play capability of the playing module of the stream media client, and thus adaptable to a wide range of terminals; in addition, channel switch does not depend on real time stream media consultation between the terminal and the stream media server, having no impacts on the play of a current stream.

Particularly, at step 12, the channel ID can be a channel number, etc. the client ID can be an IP address of a stream media client, or a session ID of a stream playing session established by the stream media client and a stream media server, and the like.

Optionally, the service module of the stream media client may comprise: a service module of a stream media client executed on a terminal. In this case, the playing module of the stream media client may comprise: a playing module of a stream media client executed on a terminal.

Alternatively, the service module of the stream media client may comprise: a stream media service Web portal or a stream media service WAP (Wireless Application Protocol) portal accessible to a terminal through a browser, etc. In this case, the playing module of the stream media client may comprise: a stream media player carried on the terminal by default.

Particularly, a stream media service Web portal or a stream media service WAP portal refers to a portal capable of providing unique mobile data service entries for mobile terminals, or providing a visit menu for mobile users. Mobile users browse the stream media service Web portal/stream media service WAP portal through their browsers, and the stream media service Web portal/stream media service WAP portal provides service acceptance, personalized customization, customer service, etc for mobile users in the form of Web/WAP services.

A better understanding about the service module and playing module of the stream media client described above can be obtained through the following description.

The terminal may comprise mobile terminal or fixed terminal. The mobile terminal may comprise mobile phone, PDA (personal Digital Assistant), etc; the fixed terminal may comprise IPTV (Internet Protocol Television), DTV (Digital Television), WEBTV (WEB Television), etc.

The service module of the stream media client may be used to provide a UI (user interface) service exhibition section, such as a visit menu, a channel list, etc. The playing module of the stream media client may be a media player supporting RTSP (Real Time Stream Protocol), RTP (Real Time Transport Protocol), RTCP (Real-time Transport Control Protocol), or HTTP (Hypertext Transmission Protocol), etc.

Hence, common service modules and playing modules of stream media clients executed on terminals that are well known by those skilled in the art can be used as the service modules and playing module described above. Alternatively, the terminal does not have a client executed thereon, and when a user browses a stream media service Web portal/stream media service WAP portal through a browser, the stream media service Web portal/stream media service WAP portal may act as the service module of the stream media client described above, correspondingly, a stream media player carried on the terminal by default may act as the playing module of the stream media client.

As an illustration, in the case of an IPTV/DTV terminal, the service module of the stream media client may be a service module of an IPTV top-box client, or a service module of a DTV top-box client; the playing module of the stream media client may be a playing module of the IPTV top-box client, or a playing module of a DTV top-box client. In the case of a WEBTV terminal, the service module of the stream media client may be a service module of a WEBTV client; the playing module of the stream media client may be a playing module of a WEBTV client.

As an illustration, when the terminal is a mobile phone, the service module of the stream media client may be a stream media service Web portal/stream media service WAP portal browsed by a user through a browser; the playing module of the stream media client may be a player carried on the mobile phone by default.

Particularly, a channel switch agent can provide interfaces for the service module of the stream media client and a stream media server. The channel switch agent can receive a channel switch request message sent from the service module of the stream media client, and can forward the channel switch request message to the stream media server. The channel switch agent can be provided separately, or can be integrated into other software of modules. For example, the channel switch agent can act as a module of a client-service server, which is integrated into the client-service server. The client-service server may comprise: a service server on a terminal client, a server on a stream media service Web portal/stream media service WAP portal, etc. Services revealed by the service module of the stream media client, such as a visit menu, a channel list, etc, can be obtained from the client-service server. Also, the channel switch agent may be a module of a stream media server, which is integrated into the stream media server.

Particularly, the stream media server can play RTSP, RTP, RTCP, or HTTP streams, the stream media server may provide interfaces to the channel switch agent. The stream media server receives a channel switch request message sent from the channel switch agent, wherein the channel switch request message may carry with switched channel ID information and client ID information. The stream media server, according to the client ID, determines a stream playing session, which has been established between the stream media server and the stream media client, thereby, the stream media server sends stream media data after channel switch to the playing module of the stream media client through the established stream playing session, without deconstructing and reconstructing the media playing session, to play the stream media data after channel switch by the playing module of the stream media client.

It can be seen from above, the stream media channel switch method of the embodiment of this invention also belong to a FCS(Fast Channel Switching) process in the stream media living broadcasting service, which is completed between a terminal and a stream media server on the premise of without deconstructing and reconstructing a media playing session. Thus, the channel switch agent involved in the stream media channel switch method of the embodiment of this invention can be recognized as a FCS (Fast Channel Switching) proxy.

Furthermore, interface protocols between the channel switch agent and the service module of the stream media client, the channel switch agent and the stream media server can be user-defined protocols, such as HTTP (Hypertext Transfer protocol), HTTP+XML (XML, Extensible Markup language), SOAP (Simple Object Access Protocol), etc.

The stream media server and the playing module of the stream media client can realize message interaction therebetween through a RTSP protocol, a RTP protocol, a RTCP protocol, or a HTTP protocol.

It can be seen from the technical solution provided in the embodiment of this invention that the service module of the stream media client and the stream media server incorporate to realize channel switch, and no modifications need to be made to the playing module of the stream media client, adaptable to even more terminals.

Channel switch is transparent to the playing module of the stream media client, and thus does not interfere with the current play of the playing module of the stream media client, leading to perfect user experience.

Interface protocols between the channel switch agent and the service module of the stream media client, the channel switch agent and the stream media server are user-defined protocols, achieving good expansibility.

With the technical solution of the embodiment of this invention, channel switch does not depend on stream protocol consultation interaction between the terminal and the stream media server, so that interaction between the terminal and the stream media server can be reduced, implementation complexity of stream protocols can be lowered, stream process efficiency can be improved, and rapid channel switch can be realized.

As shown in Fig.2, a stream media channel switch method is provided in an embodiment of this invention, comprising the following steps.

21. A playing module of a stream media client plays stream media data of a current channel.

22. A service module of the stream media client sends a channel switch request message to a channel switch agent, wherein the channel switch request message carrying with switched channel ID information and client ID information of the stream media client.

23. The playing module receives stream media data corresponding to the switched channel ID sent from a stream media server through a stream playing session corresponding to the client ID, and plays the stream media data corresponding to the switched channel ID.

Particularly, at step 22, the channel ID can be a channel number, etc. the client ID can be an IP address of a stream media client, or a session ID of a stream playing session established by the stream media client and a stream media server, and the like.

It can be seen from the technical solution provided in the embodiment of this invention, the service module of the stream media client and the stream media server cooperate to realize channel switch, causing no restrictions on play capability of the playing module of the stream media client, and thus adaptable to a wide range of terminals; in addition, channel switch does not depend on real time stream media consultation between the terminal and the stream media server, having no impacts on the play of a current stream, and avoiding influence on user experience.

Particularly, the stream media client may comprise:

A service module for, when a playing module is playing stream media data of a current channel, sending a channel switch request message to a channel switch agent, the channel switch request message carrying with switched channel ID information and client ID information of the stream media client.

A playing module for playing stream media data of a current channel, and after channel switch, receiving stream media data corresponding to the switched channel ID sent from a stream media server through a stream playing session corresponding to the client ID, and playing the stream media data corresponding to the switched channel ID sent from the stream media server.

Optionally, the service module of the stream media client may comprise: a service module of a stream media client executed on a terminal. In this case, the playing module of the stream media client may comprise: a playing module of a stream media client executed on a terminal.

Alternatively, the service module of the stream media client may comprise: a stream media service Web portal or a stream media service WAP (Wireless Application Protocol) portal accessible to a terminal through a browser, etc. In this case, the playing module of the stream media client may comprise: a stream media player carried on the terminal by default.

The terminal may comprise mobile terminal or fixed terminal. The mobile terminal may comprise mobile phone, PDA (personal Digital Assistant), etc; the fixed terminal may comprise IPTV (Internet Protocol Television), DTV (Digital Television), WEBTV (WEB Television), etc.

As an illustration, in the case of an IPTV/DTV terminal, the service module of the stream media client may be a service module of an IPTV top-box client, or a service module of a DTV top-box client; the playing module of the stream media client may be a playing module of the IPTV top-box client, or a playing module of a DTV top-box client. In the case of a WEBTV terminal, the service module of the stream media client may be a service module of a WEBTV client; the playing module of the stream media client may be a playing module of a WEBTV client.

As an illustration, when the terminal is a mobile phone, the service module of the stream media client may be a stream media service Web portal/stream media service WAP portal browsed by a user through a browser; the playing module of the stream media client may be a player carried on the mobile phone by default.

It can be seen from the technical solution provided in the embodiment of this invention that the service module of the stream media client and the stream media server incorporate to realize channel switch, and no modifications need to be made to the playing module of the stream media client, adaptable to even more terminals.

Channel switch is transparent to the playing module of the stream media client, and thus does not interfere with the current play of the playing module of the stream media client, leading to perfect user experience.

Interface protocols between the channel switch agent and the service module of the stream media client, the channel switch agent and the stream media server are user-defined protocols, achieving good expansibility.

With the technical solution of the embodiment of this invention, channel switch does not depend on stream protocol consultation interaction between the terminal and the stream media server, so that interaction between the terminal and the stream media server can be reduced, implementation complexity of stream protocols can be lowered, stream process efficiency can be improved, and rapid channel switch can be realized.

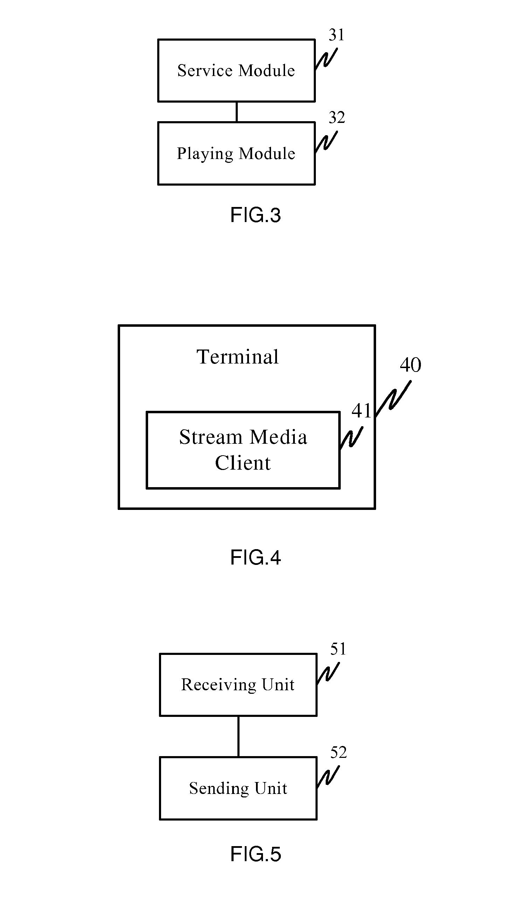

As shown in Fig.3, corresponding to the stream media channel switch method of the above embodiment, a stream media client is provided in an embodiment of this invention, comprising:

A service module 31 for, when a playing module is playing stream media data of a current channel, sending a channel switch request message to a channel switch agent, the channel switch request message carrying with switched channel ID information and client ID information of the stream media client.

A playing module 32 for playing stream media data of a current channel, and after channel switch, receiving stream media data corresponding to the switched channel ID sent from a stream media server through a stream playing session corresponding to the client ID, and playing the stream media data corresponding to the switched channel ID sent from the stream media server.

It can be seen from the technical solution provided in the embodiment of this invention, the service module of the stream media client and the stream media server cooperate to realize channel switch, causing no restrictions on play capability of the playing module of the stream media client, and thus adaptable to a wide range of terminals; in addition, channel switch does not depend on real time stream media consultation between the terminal and the stream media server, having no impacts on the play of a current stream, and avoiding influence on user experience.

Optionally, particularly, the channel ID can be a channel number, etc. the client ID can be an IP address of a stream media client, or a session ID of a stream playing session established by the stream media client and a stream media server, and the like.

Optionally, the service module of the stream media client may comprise: a service module of a stream media client executed on a terminal. In this case, the playing module of the stream media client may comprise: a playing module of a stream media client executed on a terminal.

Alternatively, the service module of the stream media client may comprise: a stream media service Web portal or a stream media service WAP (Wireless Application Protocol) portal accessible to a terminal through a browser, etc. in this case, the playing module of the stream media client may comprise: a stream media player carried on the terminal by default.

Particularly, a stream media service Web portal or a stream media service WAP portal refers to a portal capable of providing unique mobile data service entries for mobile terminals, which may provide a visit menu for mobile users. Mobile users browse the stream media service Web portal/stream media service WAP portal through their browsers, and the stream media service Web portal/stream media service WAP portal provides service acceptance, personalized customization, customer service, etc for mobile users in the form of Web/WAP services.

The terminal may comprise mobile terminal or fixed terminal. The mobile terminal may comprise mobile phone, PDA (personal Digital Assistant), etc; the fixed terminal may comprise IPTV (Internet Protocol Television), DTV (Digital Television), WEBTV (WEB Television), etc.

The service module of the stream media client may be used to provide a UI (user interface) service exhibition section, such as a visit menu, a channel list, etc. The playing module of the stream media client may be a media player supporting RTSP (Real Time Stream Protocol), RTP (Real Time Transport Protocol), RTCP (Real-time Transport Control Protocol), or HTTP (Hypertext Transmission Protocol), etc.

Hence, common service modules and playing modules of stream media clients executed on terminals that are well known by those skilled in the art can be used as the service modules and playing module described above. Alternatively, the terminal does not have a client executed thereon, and when a user browses a stream media service Web portal/stream media service WAP portal through a browser, the stream media service Web portal/stream media service WAP portal may act as the service module of the stream media client described above, correspondingly, a stream media player carried on the terminal by default may act as the playing module of the stream media client.

As an illustration, in the case of an IPTV/DTV terminal, the service module of the stream media client may be a service module of an IPTV top-box client, or a service module of a DTV top-box client; the playing module of the stream media client may be a playing module of the IPTV top-box client, or a playing module of a DTV top-box client. In the case of a WEBTV terminal, the service module of the stream media client may be a service module of a WEBTV client; the playing module of the stream media client may be a playing module of a WEBTV client.

As an illustration, when the terminal is a mobile phone, the service module of the stream media client may be a stream media service Web portal/stream media service WAP portal browsed by a user through a browser; the playing module of the stream media client may be a player carried on the mobile phone by default.

Particularly, a channel switch agent can provide interfaces for the service module of the stream media client and a stream media server. The channel switch agent can receive a channel switch request message sent from the service module of the stream media client, and can forward the channel switch request message to the stream media server. The channel switch agent can be provided separately, or can be integrated into other software of modules. For example, the channel switch agent can act as a module of a client-service server, which is integrated into the client-service server. The client-service server may comprise: a service server on a terminal client, a server on a stream media service Web portal/stream media service WAP portal, etc. Services revealed by the service module of the stream media client, such as a visit menu, a channel list, etc, can be obtained from the client-service server. Also, the channel switch agent may be a module of a stream media server, which is integrated into the stream media server.

Particularly, the stream media server can play RTSP, RTP, RTCP, or HTTP streams, the stream media server may provide interfaces to the channel switch agent. The stream media server receives a channel switch request message sent from the channel switch agent, wherein the channel switch request message may carry with switched channel ID information and client ID information. The stream media server, according to the client ID, determines a stream playing session, which has been established between the stream media server and the stream media client, thereby, the stream media server sends stream media data after channel switch to the playing module of the stream media client through the established stream playing session, without deconstructing and reconstructing the media playing session, to play the stream media data after channel switch by the playing module of the stream media client.

Furthermore, interface protocols between the channel switch agent and the service module of the stream media client, the channel switch agent and the stream media server can be user-defined protocols, such as HTTP (Hypertext Transfer protocol), HTTP+XML (XML, Extensible Markup language), SOAP (Simple Object Access Protocol), etc.

The stream media server and the playing module of the stream media client can realize message interaction therebetween through a RTSP protocol, a RTP protocol, a RTCP protocol, or a HTTP protocol.

It can be seen from the technical solution provided in the embodiment of this invention that the service module of the stream media client and the stream media server incorporate to realize channel switch, adaptable to more terminals; channel switch is transparent to the playing module of the stream media client, and thus does not interfere with the current play of the playing module of the stream media client, leading to perfect user experience; interface protocols between the channel switch agent and the service module of the stream media client, the channel switch agent and the stream media server are user-defined protocols, resulting in good expansibility; channel switch does not depend on stream protocol consultation interaction between the terminal and the stream media server, so that interaction between the terminal and the stream media server can be reduced, implementation complexity of stream protocols can be lowered, stream process efficiency can be improved, and rapid channel switch can be realized.

As shown in Fig.4, corresponding to the stream media client of the above embodiment, a terminal 40 is further provided in an embodiment of this invention, which comprises a stream media client 41 of the above embodiment.

The terminal 40 may comprise mobile terminal or fixed terminal. The mobile terminal may comprise mobile phone, PDA (personal Digital Assistant), etc; the fixed terminal may comprise IPTV (Internet Protocol Television), DTV (Digital Television), WEBTV (WEB Television), etc.

The stream media client 41 may comprise:

A service module for, when a playing module is playing stream media data of a current channel, sending a channel switch request message to a channel switch agent, the channel switch request message carrying with switched channel ID information and client ID information of the stream media client.

A playing module, for playing stream media data of a current channel, and after channel switch, receiving stream media data corresponding to the switched channel ID sent from a stream media server through a stream playing session corresponding to the client ID, and playing the stream media data corresponding to the switched channel ID sent from the stream media server.

It can be seen from the technical solution provided in the embodiment of this invention, the service module of the stream media client and the stream media server cooperate to realize channel switch, causing no restrictions on play capability of the playing module of the stream media client, and thus adaptable to a wide range of terminals; in addition, channel switch does not depend on real time stream media consultation between the terminal and the stream media server, having no impacts on the play of a current stream, and avoiding influence on user experience.

Optionally, particularly, the channel ID can be a channel number, etc. the client ID can be an IP address of a stream media client, or a session ID of a stream playing session established by the stream media client and a stream media server, and the like.

Optionally, the service module of the stream media client may comprise: a service module of a stream media client executed on a terminal. In this case, the playing module of the stream media client may comprise: a playing module of a stream media client executed on a terminal.

Alternatively, the service module of the stream media client may comprise: a stream media service Web portal or a stream media service WAP (Wireless Application Protocol) portal accessible to a terminal through a browser, etc. In this case, the playing module of the stream media client may comprise: a stream media player carried on the terminal by default.

As an illustration, in the case of an IPTV/DTV terminal, the service module of the stream media client may be a service module of an IPTV top-box client, or a service module of a DTV top-box client; the playing module of the stream media client may be a playing module of the IPTV top-box client, or a playing module of a DTV top-box client. In the case of a WEBTV terminal, the service module of the stream media client may be a service module of a WEBTV client; the playing module of the stream media client may be a playing module of a WEBTV client.

As an illustration, when the terminal is a mobile phone, the service module of the stream media client may be a stream media service Web portal/stream media service WAP portal browsed by a user through a browser; the playing module of the stream media client may be a player carried on the mobile phone by default.

As shown in Fig.5, corresponding to the stream media channel switch method of the above embodiment, a channel switch agent is provided in an embodiment of this invention, comprising:

A receiving unit 51 for receiving a channel switch request message sent from a service module of a stream media client, the channel switch request message carrying with switched channel ID information and client ID information of the stream media client;

A sending unit 52 for sending the channel switch request message carrying with switched channel ID information and the client ID information to a stream media server.

It can be seen from technical solutions provided in embodiments of this invention, the service module of the stream media client and the stream media server cooperate to realize channel switch, causing no restrictions on play capability of the playing module of the stream media client, and thus adaptable to a wide range of terminals; in addition, channel switch does not depend on real time stream media consultation between the terminal and the stream media server, having no impacts on the play of a current stream.

Particularly, the channel ID can be a channel number, etc. the client ID can be an IP address of a stream media client, or a session ID of a stream playing session established by the stream media client and a stream media server, and the like.

Optionally, the service module of the stream media client may comprise: a service module of a stream media client executed on a terminal. In this case, the playing module of the stream media client may comprise: a playing module of a stream media client executed on a terminal.

Alternatively, the service module of the stream media client may comprise: a stream media service Web portal or a stream media service WAP (Wireless Application Protocol) portal accessible to a terminal through a browser, etc. in this case, the playing module of the stream media client may comprise: a stream media player carried on the terminal by default.

Particularly, a stream media service Web portal or a stream media service WAP portal refers to a portal capable of providing unique mobile data service entries for mobile terminals, which may provide a visit menu for mobile users. Mobile users browse the stream media service Web portal/stream media service WAP portal through their browsers, and the stream media service Web portal/stream media service WAP portal provides service acceptance, personalized customization, customer service, etc for mobile users in the form of Web/WAP services.

The terminal may comprise mobile terminal or fixed terminal. The mobile terminal may comprise mobile phone, PDA (personal Digital Assistant), etc; the fixed terminal may comprise IPTV (Internet Protocol Television), DTV (Digital Television), WEBTV (WEB Television), etc.

The service module of the stream media client may be used to provide a UI (user interface) service exhibition section, such as a visit menu, a channel list, etc. The playing module of the stream media client may be a media player supporting RTSP (Real Time Stream Protocol), RTP (Real Time Transport Protocol), RTCP (Real-time Transport Control Protocol), or HTTP (Hypertext Transmission Protocol), etc.

Hence, common service modules and playing modules of stream media clients executed on terminals that are well known by those skilled in the art can be used as the service modules and playing module described above. Alternatively, the terminal does not have a client executed thereon, and when a user browses a stream media service Web portal/stream media service WAP portal through a browser, the stream media service Web portal/stream media service WAP portal may act as the service module of the stream media client described above, correspondingly, a stream media player carried on the terminal by default may act as the playing module of the stream media client.

As an illustration, in the case of an IPTV/DTV terminal, the service module of the stream media client may be a service module of an IPTV top-box client, or a service module of a DTV top-box client; the playing module of the stream media client may be a playing module of the IPTV top-box client, or a playing module of a DTV top-box client. In the case of a WEBTV terminal, the service module of the stream media client may be a service module of a WEBTV client; the playing module of the stream media client may be a playing module of a WEBTV client.

As an illustration, when the terminal is a mobile phone, the service module of the stream media client may be a stream media service Web portal/stream media service WAP portal browsed by a user through a browser; the playing module of the stream media client may be a player carried on the mobile phone by default.

Particularly, a channel switch agent can provide interfaces for the service module of the stream media client and a stream media server. The channel switch agent can receive a channel switch request message sent from the service module of the stream media client, and can forward the channel switch request message to the stream media server. The channel switch agent can be provided separately, or can be integrated into other software of modules. For example, the channel switch agent can act as a module of a client-service server, which is integrated into the client-service server. The client-service server may comprise: a service server on a terminal client, a server on a stream media service Web portal/stream media service WAP portal, etc. Services revealed by the service module of the stream media client, such as a visit menu, a channel list, etc, can be obtained from the client-service server. Also, the channel switch agent may be a module of a stream media server, which is integrated into the stream media server.

It can be seen from above, the stream media channel switch method of the embodiment of this invention also belong to a FCS(Fast Channel Switching) process in the stream media living broadcasting service, which is completed between a terminal and a stream media server on the premise of without deconstructing and reconstructing a media playing session. Thus, the channel switch agent involved in the stream media channel switch method of the embodiment of this invention can be recognized as a FCS (Fast Channel Switching) proxy.

Particularly, the stream media server can play RTSP, RTP, RTCP, or HTTP streams, the stream media server may provide interfaces to the channel switch agent. The stream media server receives a channel switch request message sent from the channel switch agent, wherein the channel switch request message may carry with switched channel ID information and client ID information. The stream media server, according to the client ID, determines a stream playing session, which has been established between the stream media server and the stream media client, thereby, the stream media server sends stream media data after channel switch to the playing module of the stream media client through the established stream playing session, without deconstructing and reconstructing the media playing session, to play the stream media data after channel switch by the playing module of the stream media client.

Furthermore, interface protocols between the channel switch agent and the service module of the stream media client, the channel switch agent and the stream media server can be user-defined protocols, such as HTTP (Hypertext Transfer protocol), HTTP+XML (XML, Extensible Markup language), SOAP (Simple Object Access Protocol), etc.

The stream media server and the playing module of the stream media client can realize message interaction therebetween through a RTSP protocol, a RTP protocol, a RTCP protocol, or a HTTP protocol.

It can be seen from the technical solution provided in the embodiment of this invention that the service module of the stream media client and the stream media server incorporate to realize channel switch, no modifications need to be made to the playing module of the stream media client, adaptable to more terminals; channel switch is transparent to the playing module of the stream media client, and thus does not interfere with the current play of the playing module of the stream media client, leading to perfect user experience; interface protocols between the channel switch agent and the service module of the stream media client, the channel switch agent and the stream media server are user-defined protocols, resulting in good expansibility; channel switch does not depend on stream protocol consultation interaction between the terminal and the stream media server, so that interaction between the terminal and the stream media server can be reduced, implementation complexity of stream protocols can be lowered, stream process efficiency can be improved, and rapid channel switch can be realized.

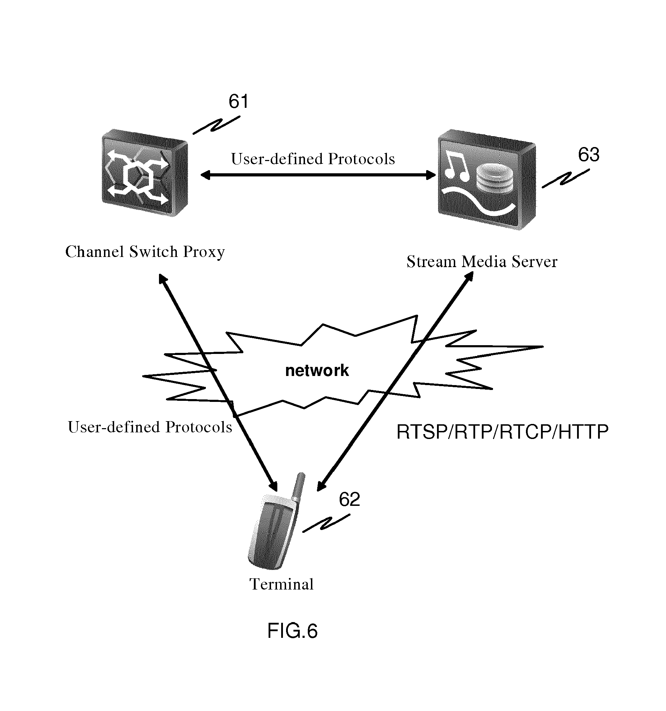

As shown in Fig.6, a channel switch system for stream media is provided in an embodiment of this invention, comprising a channel switch agent 61, a terminal 62, and a stream media server 63, wherein a stream media client is provided on the terminal 62.

A reference can be made to the above embodiment for the understanding of the channel switch agent 61, the terminal 62, the stream media client and the stream media server 63.

The stream media client comprises a service module and a playing module. The stream media client has user-defined protocol interfaces with the channel switch agent 61, wherein the user-defined protocols may be HTTP protocol, HTTP+XML protocol, or SOAP protocol. RTSP/RTP/RTCP/HTTP streams can be transmitted between the stream media client and the stream media server 63.

Wherein, the terminal of the channel switch system for stream media shown in Fig.6 is a mobile phone, the stream media client is a mobile phone client; however, the stream media client of the channel switch system for stream media of the embodiment of this invention is not limited thereto.

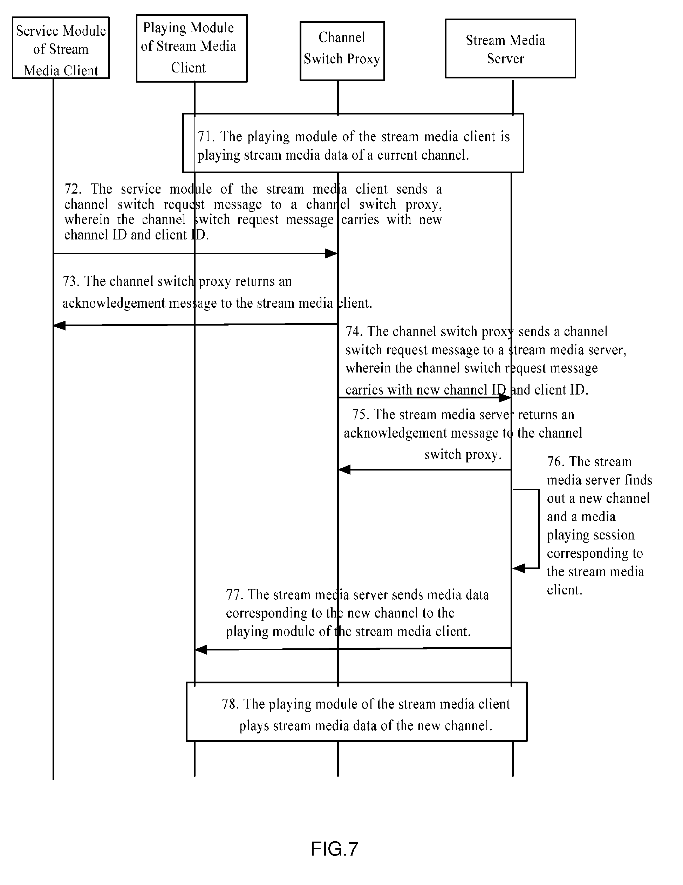

As shown in Fig.7, a channel switch process of the channel switch system for stream media will be particularly described, taking a stream media client having a service module and a playing module as an example.

71. The playing module of the stream media client plays stream media data of a current channel.

72. The service module of the stream media client sends a channel switch request message to a channel switch agent, wherein the channel switch request message carrying with switched channel ID information and client ID information of the stream media client.

A user sends a channel switch request, the service module of the stream media client sends a FCS_REQ request message to the channel switch agent, wherein the FCS_REQ request message carries with a new channel ID, a client ID and other information, wherein the new channel ID is the switched channel ID.

73. The channel switch agent returns an acknowledgement message to the stream media client.

After receiving the FCS_REQ request message from the service module of the stream media client, the channel switch agent returns an acknowledgement message FCS_ACK.

74. The channel switch agent sends a channel switch request message to a stream media server, wherein the channel switch request message carries with the new channel ID and the client ID.

After receiving the FCS_REQ request message from the service module of the stream media client, the channel switch agent forwards the FCS_REQ request message to the stream media server, wherein the FCS_REQ request message carries with a new channel ID, a client ID and other information, wherein the new channel ID is the switched channel ID.

75. The stream media server returns an acknowledgement message to the channel switch agent.

After receiving the FCS_REQ request message sent from channel switch agent, the stream media server returns an acknowledgement message.

76. The stream media server finds out a new channel and a media playing session corresponding to the stream media client.

After receiving the FCS_REQ request message sent from channel switch agent, the stream media server finds out a new channel according to the new channel ID in the FCS_REQ request message, and the stream media server finds out a media playing session corresponding to the stream media client.

77. The stream media server sends media data corresponding to the new channel to the playing module of the stream media client.

The stream media server, according to media information of the media playing session corresponding to the stream media client, assembles media data corresponding to the new channel and sends to the playing module of the stream media client.

78. The playing module of the stream media client play the stream media data of the new channel.

The playing module of the stream media client receives the stream media data of the new channel NEW_CHANNEL sent from the stream media server, and plays the stream media data of the new channel NEW_CHANNEL.

It can be seen from the technical solution provided in the embodiment of this invention that the service module of the stream media client and the stream media server incorporate to realize channel switch, no modifications need to be made to the playing module of the stream media client, adaptable to more terminals; channel switch is transparent to the playing module of the stream media client, and thus does not interfere with the current play of the playing module of the stream media client, leading to perfect user experience; interface protocols between the channel switch agent and the service module of the stream media client, the channel switch agent and the stream media server are user-defined protocols, resulting in good expansibility; channel switch does not depend on stream protocol consultation interaction between the terminal and the stream media server, so that interaction between the terminal and the stream media server can be reduced, implementation complexity of stream protocols can be lowered, stream process efficiency can be improved, and rapid channel switch can be realized.

From the above description of embodiments of this invention, those skilled in the art may understand: some or all steps of the method of the above described embodiment can be realized with programs and instruction related hardware, the programs can be stored in a computer readable storage medium, such as, a magnetic disk, an optical disc, ROM (Read-Only Memory)/RAM(Random Access Memory), etc, which when executed include steps of the method of the embodiment.

Description above is merely particular implementations of this invention, and the scope of this invention is not limited thereto. Any those skilled in the art can easily conceive modifications or alternations within the technical scope disclosed in this invention, which should be covered in the scope of this invention. Thus, the scope of this invention should coincide with the scope of accompanying claims.

## Claims

1. A stream media channel switch method, **characterized by** comprising:
playing stream media data of a current channel by a playing module of a stream media client;
after a channel switch agent receives a channel switch request message sent from a service module of the stream media client, sending the channel switch request message to a stream media server by the channel switch agent, wherein the channel switch request message carries with switched channel ID information and client ID information of the stream media client;
sending stream media data corresponding to the switched channel ID to the playing module of the stream media client by the stream media server through a stream playing session corresponding to the client ID, and playing the stream media data corresponding to the switched channel ID by the playing module.

2. The method according to claim 1, **characterized in that** the service module of the stream media client comprises a service module of a stream media client executed on a terminal, and correspondingly the playing module of the stream media client comprises a playing module of a stream media client executed on a terminal; or
the service module of the stream media client comprises a stream media service Web portal or a stream media service WAP portal accessible to a terminal through a browser, and correspondingly the playing module of the stream media client comprise a stream media player carried on the terminal by default.

3. The method according to claim 1, **characterized in that** the service module of the stream media client and the channel switch agent realize message interaction therebetween through the HTTP protocol, HTTP+XML protocol or Soap protocol;
the channel switch agent and the stream media server realize message interaction therebetween through the HTTP protocol, HTTP+XML protocol or Soap protocol; and
the stream media server and the playing module of the stream media client realize message interaction therebetween through the RTSP protocol, RTP protocol, RTCP protocol, or HTTP protocol.

4. A stream media channel switch method, **characterized by** comprising:
playing stream media data of a current channel by a playing module of a stream media client;
sending a channel switch request message to a channel switch agent by a service module of the stream media client, wherein the channel switch request message carries with switched channel ID information and client ID information of the stream media client;
receiving, by the playing module of the stream media client, stream media data corresponding to the switched channel ID sent from a stream media server through a stream playing session corresponding to the client ID, and playing the stream media data corresponding to the switched channel ID by the playing module.

5. The method according to claim 4, **characterized in that** the service module of the stream media client comprises a service module of a stream media client executed on a terminal, and correspondingly the playing module of the stream media client comprises a playing module of a stream media client executed on a terminal; or
the service module of the stream media client comprises a stream media service Web portal or a stream media service WAP portal accessible to a terminal through a browser, and correspondingly the playing module of the stream media client comprise a stream media player carried on the terminal by default.

6. A stream media client, **characterized by** comprising:
a service module configured to send a channel switch request message to a channel switch agent when a playing module is playing stream media data of a current channel, wherein the channel switch request message carries with switched channel ID information and client ID information of the stream media client;
a playing module configured to play stream media data of a current channel, and to receive stream media data corresponding to the switched channel ID sent from a stream media server through a stream playing session corresponding to the client ID after a channel is switched, and to play the stream media data corresponding to the switched channel ID sent from the stream media server.

7. The stream media client according to claim 6, **characterized in that** the service module of the stream media client comprises a service module of a stream media client executed on a terminal, and correspondingly the playing module of the stream media client comprises a playing module of a stream media client executed on a terminal; or
the service module of the stream media client comprises a stream media service Web portal or a stream media service WAP portal accessible to a terminal through a browser, and correspondingly the playing module of the stream media client comprise a stream media player carried on the terminal by default.

8. A terminal, **characterized by** comprising a stream media client according to claim 6 or claim 7.

9. A channel switch agent, **characterized by** comprising:
a receiving unit for receiving a channel switch request message sent from a service module of a stream media client, wherein the channel switch request message carries with switched channel ID information and client ID information of the stream media client;
a sending unit for sending the channel switch request message carrying with switched channel ID information and the client ID information to a stream media server.

10. The channel switch agent according to claim 9, **characterized in that** the channel switch agent is integrated into a client-service server, the client-service server being used to provide exhibition information for the service module of the stream media client; or
the channel switch agent is integrated into the stream media server.
